**Europäisches Patentamt**

**European Patent Office**

**Office européen des brevets**

(11) Veröffentlichungsnummer: **0 022 196**
**A1**

(12) # EUROPÄISCHE PATENTANMELDUNG

(21) Anmeldenummer: **80103415.8**

(22) Anmeldetag: **19.06.80**

(51) Int. Cl.³: **B 29 F 3/00**
**B 29 D 23/04**

(30) Priorität: **04.07.79 DE 2927018**

(43) Veröffentlichungstag der Anmeldung:
**14.01.81 Patentblatt 81/2**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Reimann, Horst, Dr.**
**Adelheidstrasse 26**
**D-6520 Worms(DE)**

(72) Erfinder: **Laun, Martin, Dr.**
**Duererstrasse 22**
**D-6700 Ludwigshafen(DE)**

(72) Erfinder: **Pellkofer, Erich**
**Mozartstrasse 4**
**D-6704 Mutterstadt(DE)**

(72) Erfinder: **Theysohn, Rainer, Dr.**
**Bruesseler Ring 38**
**D-6700 Ludwigshafen(DE)**

(72) Erfinder: **Schmidt, Franz, Dr.**
**Trommstrasse 3**
**D-6800 Mannheim 1(DE)**

(54) **Verfahren zur Herstellung von Kunststoffprofilen aus Polyamid.**

(57) Bei einem Verfahren zur Herstellung von Kunststoffprofilen mit einer Dicke von mehr als 0,5 mm wird als Kunststoff ein Copolyamid auf Basis von Adipinsäure und Hexamethylendiamin, bei dem 5 bis 40 Molprozent der Adipinsäure durch Terephtalsäure ersetzt sind, verwendet. Der Kunststoff wird in einem Extruder aufgeschmolzen, aus der Düse direkt ins Freie ausgepreßt und gegebenenfalls anschließend kalibriert. Die Profile eignen sich insbesondere als thermische Trennprofile für Aluminiumfensterrahmen.

EP 0 022 196 A1

Croydon Printing Company Ltd.

BASF Aktiengesellschaft                    O.Z. 0050/033938

Verfahren zur Herstellung von Kunststoffprofilen
aus Polyamid

Polyamide weisen eine Reihe von günstigen Eigenschaften auf, wie hoher Schmelzpunkt, Kristallinität und gute Chemikalienbeständigkeit, die sie geeignet machen zur Herstellung von hochwertigen Profilen und Rohren, die aggresiven Medien und hohen Temperaturen ausgesetzt werden können. Die Extrusion zu Profilen erfordert eine hohe Viskosität der Schmelze, damit diese nach Verlassen der Extruderdüse nicht zusammenfließt, sondern im wesentlichen die durch die Düse gegebene Form bis zum Einlauf in die Kalibriervorrichtung beibehält. Bei der Extrusion von Polyamiden mit mittlerem Molekulargewicht, z.B. mit einem K-Wert von 70, muß, damit überhaupt ein Profil erhalten wird, die Formgebung und Abkühlung innerhalb der Düse geschehen, die zu diesem Zweck aus einem beheizten und gekühlten Teil mit scharfer Wärmetrennung besteht. Üblicherweise verwendet man deshalb zur Profil-Extrusion sehr hochmolekulare Polyamide mit K-Werten oberhalb von 80, bevorzugt oberhalb von 90. Um eine derart hohe Viskosität zu erreichen, ist bei der Herstellung dieser Polyamide anschließend an die Polykondensation in einem besonderen Verfahrensschritt eine Nachkondensation durch Tempern erforderlich. Bei der Verarbeitung auf dem Extruder, insbesondere bei der Einarbeitung von Glasfasern müssen hohe Energien aufgewandt wer-

Dd/BL

den. Durch die dabei auftretende hohe Friktion werden die Glasfaserlängen reduziert, was zu schlechteren mechanischen Werten führt; außerdem wird der K-Wert um 10 oder mehr Einheiten abgebaut.

Der Erfindung lag nun die Aufgabe zugrunde, ein Polyamid zu finden, das bei der Verarbeitung im Extruder eine niedrige Schmelzviskosität aufweist, nach Verlassen der Extruderdüse aber so hochviskos ist, daß die Schmelze ihre Form beibehält, so daß direkt ins Freie extrudiert werden kann, wobei - gegebenenfalls auch ohne Nachkalibrierung - maßgetreue Profile erhalten werden.

Diese Aufgabe wird gelöst, wenn man ein Copolyamid mit einem K-Wert von 65 bis 80, vorzugsweise von 70 bis 75, auf Basis von Adipinsäure und Hexamethylendiamin verwendet, bei dem 5 bis 40, bevorzugt 15 bis 25 Molprozent der Adipinsäure durch Terephthalsäure ersetzt sind.

Copolyamide aus Hexamethylendiamin, Adipinsäure und Terephthalsäure sind bekannt, z.B. aus der DE-PS 929 151. Sie werden durch übliche Polykondensation der Monomeren hergestellt. In diesen Copolyamiden ist die Terephthalsäure isomorph eingebaut, so daß keine Schmelzpunktsdepression oder Verschlechterung der mechanischen Eigenschaften gegenüber dem Homopolyamid (Polyamid 6.6) stattfindet. Aus der GB-PS 1 114 541 ist bekannt, daß der Einbau von Terephthalsäure zu einer Erhöhung der Schmelzviskosität von Polyamid 6.6 führt. Nach dieser Patentschrift können aber nur bis zu 18 % Terephthalsäure eingebaut werden, da sonst der Erweichungspunkt zu stark angehoben wird, und das Copolyamid durch Schmelzspinnen nicht mehr verarbeitet werden kann.

Überraschenderweise wurde nun gefunden, daß solche Copolyamide bei der Verarbeitung auf dem Extruder sich bezüglich der Viskosität verhalten wie entsprechende Homopolyamide gleichen K-Werts; nach dem Auspressen aus der Düse jedoch ein Viskositätsverhalten zeigen, das noch günstiger ist als das von Homopolyamiden mit mehr als doppelt so hohem Molekulargewicht, d.h. mit K-Werten, die um 10 bis 20 Einheiten höher liegen.

Die erfindungsgemäß zur Anwendung kommenden Copolyamide können die bei Polyamiden üblichen Zusatzstoffe, wie Verstärkungs- und Füllstoffe, Farbstoffe, Nucleierungsmittel, Brandschutzmittel, Stabilisatoren und Verarbeitungshilfsmittel enthalten. Bevorzugt ist eine Verstärkung mit Glasfasern, wobei der Glasfasergehalt der Mischung 5 bis 50, vorzugsweise 20 bis 35 Gewichtsprozent beträgt.

Bei dem erfindungsgemäßen Verfahren wird das - gegebenenfalls Zusatzstoffe enthaltende - Copolyamid in einem üblichen Extruder, vorzugsweise einem Einschneckenextruder mit Dreizonenschnecke aufgeschmolzen, homogenisiert und durch eine Düse ausgepreßt. Die Massetemperatur im Extruder liegt bevorzugt zwischen 250° und 300°C, die Verweilzeit beträgt 2 bis 6 min. Die Form der Düse richtet sich nach dem gewünschten Profil. Man kann Vollprofile herstellen, z.B. mit rundem, ovalem, quadratischem, rechteckigem oder auch komplizierter geformtem Querschnitt, ferner Hohlprofilen, wie z.B. Rohren. Die Dicke der Profile ist größer als 0,5 mm, bevorzugt größer als 1 mm. Das Profil wird aus der Düse direkt ins Freie ausgepreßt. Aufgrund der verhältnismäßig hohen Viskosität behält das Profil dabei seine Form bei, so daß eine nachfolgende Kalibrierung zwar zweckmäßig aber nicht immer notwendig ist. Wird eine Kalibrierung durchgeführt, so ist die freie Weglänge zwischen Düse und Kalibrierwerkzeug größer als 1 cm, vorzugsweise zwi- schen 2 und 10 cm. Es kann eine Vakuum-Kalibrierung oder eine Vakuum-Wasserbad-Kalibrierung durchgeführt werden. Das Profil wird von der Düse und gegebenenfalls durch die Kalibrierung hindurch mit einer Zugkraft abgezogen, die eine Verkleinerung des Profilquerschnitts im Vergleich zum Düsenquerschnitt bewirkt. Das Verhältnis kann zwischen 1:1 und 1:4, vorzugsweise zwischen 1:1,1 und 1:2 liegen.

Durch das erfindungsgemäße Verfahren können Rohre, Stäbe, Gleitschienen und ähnliche Profile hergestellt werden. Besonders interessant sind thermische Trennprofile für Aluminiumfensterrahmen. Durch diesen Verbund von Aluminiumprofilen mit einem Kunststoffprofil wird der Wärmedurchgangswert der gesamten Konstruktion stark erniedrigt. Besonders günstig ist die hohe Chemikalien- und Temperaturbeständigkeit des Copolyamids, da die Aluminiumrahmen eloxiert und einbrennlackiert werden.

<u>Beispiele</u>

1. Herstellung des Copolyamids

In einem mit $N_2$ gespülten Autoklaven wird eine Mischung aus 80 kg AH-Salz (Adipinsäure-Hexamethylendiamin), 20 kg TH-Salz (Terephthalsäure-Hexamethylendiamin) und 30 l Wasser gegeben. Die Salzlösung wird eine Stunde bei 270°C und 20 bar vorkondensiert, während zwei Stunden wird der Druck auf 0 bar reduziert und anschließend wird bei 270°C und $N_2$-Strom nachkondensiert. Das Copolyamid wird dann als Strang durch ein Wasserbad gezogen, granuliert und getrocknet. Das so hergestellte Copolyamid hat einen K-Wert von 72 und weist folgende Daten auf (Vergleich: Homopolyamid 66):

0022196

|  | Copolyamid | Polyamid 66 |
|---|---|---|
| Schmelzpunkt ($^{\circ}$C) | 257 | 260 |
| Streckspannung (N/mm$^2$) DIN 53 455 | 83 | 77 |
| Lochkerbschlagzähigkeit (kJ/m$^2$) DIN 53 753 (E 1978) | 58 | 61 |

2. Einarbeitung von Glasfasern

Das nach 1. hergestellte Copolyamid sowie ein PA 66 mit einem K-Wert von 72 und ein PA 66 mit einem K-Wert von 91 wurden auf einem Zweiwellenextruder aufgeschmolzen (Temperatur-Profil von Einzug bis zur Düse: 300$^{\circ}$C – 300$^{\circ}$C – 290$^{\circ}$C – 280$^{\circ}$C – 260$^{\circ}$C). 30 Teile endlose E-Glasfasern, die mit einer Schlichte und Aminosilan ausgerüstet waren, wurden in die Schmelze zugegeben. Die extrudierte Mischung wurde durch eine Düsenplatte in Strängen ausgetragen, abgekühlt und granuliert. Am Extruder wurde die Stromaufnahme und das Drehmoment bei einer Drehzahl von 104 (min$^{-1}$) gemessen. Der $T_{50}$-Wert gibt die Länge an, die von 50 % der Glasfasern über- bzw. unterschritten wird. Der Durchmesser der Glasfasern beträgt 10 $\mu$m.

|  | a) PA 66 | b) PA 66 | c) Copolyamid |
|---|---|---|---|
| K-Wert | 72 | 91 | 72 |
| Leistungsaufnahme (A) | 44 | 80 | 50 |
| Drehmoment (mkp) | 10,1 | 18,5 | 11,6 |
| $T_{50}$ (mm) | 0,19 | 0,11 | 0,21 |
| K-Wert nach Extrusion | 72 | 83 | 72 |

Die nach 2. hergestellten glasfaserhaltigen Polyamide wurden auf einem Einschneckenextruder bei 265°C aufgeschmolzen, durch eine Düsenplatte (Innenmaße 18 x 3,6 mm) mit dem entsprechenden Querschnitt als Strangprofil ausgepreßt und nach 5 cm freier Wegstrecke in eine Vakuumkalibrierung eingeführt. Das Produkt 2a) läßt sich aufgrund seiner niedrigen Viskosität nicht extrudieren, da es in der freien Wegstrecke seine Form nicht beibehält, sondern auseinanderfließt.

Das Produkt 2b) zeigt nach der Vakuumkalibrierung nicht die geforderte Maßkonstanz, während das erfindungsgemäße Produkt 2c) eine sehr hohe Maßkonstanz und eine formgetreue Abbildung des Profilausschnitts der Düsenplatte aufweist. Das Profil hat die Abmessungen 15 x 3 mm.

0022196

## Patentanspruch

1. Verfahren zur Herstellung von Kunststoffprofilen mit einer Dicke von mehr als 0,5 mm durch Extrusion von linearen, thermoplastischen Polyamiden, wobei das Polyamid in einem Extruder aufgeschmolzen, aus der Düse direkt ins Freie ausgepreßt und gegebenenfalls anschließend kalibriert wird, dadurch gekennzeichnet, daß man ein Copolyamid mit einem K-Wert von 65 bis 80 auf Basis von Adipinsäure und Hexamethylendiamin verwendet, bei dem 5 bis 40 Molprozent der Adipinsäure durch Terephthalsäure ersetzt sind.

2. Verfahren zur Herstellung von Kunststoffprofilen nach Anspruch 1, dadurch gekennzeichnet, daß das Polyamid 5 bis 50 Gew.%, bezogen auf die Mischung, Glasfasern enthält.

Europäisches
Patentamt

**EUROPÄISCHER RECHERCHENBERICHT**

Nummer der Anmeldung

EP 80 10 3415.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>GB - A - 1 114 541</u> (IMPERIAL CHEMICAL INDUSTRIES LIMITED)<br>* Seite 1, Zeilen 16 bis 48 *<br>-- | 1 |
| D | <u>DE - C - 929 151</u> (FARBWERKE HOECHST AKTIENGESELLSCHAFT)<br>* Beispiele 1 bis 3 *<br>-- | 1 |
| A | <u>CH - A - 325 551</u> (INVENTA AG FÜR FORSCHUNG UND PATENTVERWERTUNG LUZERN)<br>* Seite 1, Zeilen 14 bis 30 *<br>---- | |

**·KLASSIFIKATION DER ANMELDUNG (Int.Cl.3)**

B 29 F  3/00
B 29 D 23/04

**RECHERCHIERTE SACHGEBIETE (Int. Cl.3)**

B 29 D 23/04
B 29 F  3/00
C 08 L 77/06
D 01 F  6/80

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-10-1980 | BITTNER |

EPA form 1503.1  06.78